# EUROPÄISCHE PATENTSCHRIFT

(11) **EP 1 331 066 B1**
(45) Veröffentlichungstag und Bekanntmachung des Hinweises auf die Patenterteilung: **06.07.2005**
(21) Anmeldenummer: 02028999.7
(22) Anmeldetag: 27.12.2002
(51) Int. Cl.: B25B 13/48, F16B 23/00, F16B 41/00, B60B 3/16, F16B 31/02

(54) **Schlüssel eines Befestigungsteils einer diebstahlgesicherten Befestigung eines Fahrzeugrades an einer Radnabe**
Wrench for Driving a Device for Theft-proof Fastening a Vehicle Wheel to a Wheel Hub
Clé de serrage d'un dispositif de fixation anti-vol d'une roue de véhicule à un moyeu de roue

(30) Priorität: 24.01.2002 DE 10202568
(43) Veröffentlichungstag der Anmeldung: 30.07.2003
(73) Patentinhaber: ADL S.A., 77402 Lagny (FR)
(72) Erfinder: Lannerée, Daniel, 77200 Torcy (FR)
(74) Vertreter: Bauer, Wulf, Dr.

(56) Entgegenhaltungen:
- DE-C- 881 129
- FR-A- 2 359 730
- GB-A- 2 006 371
- GB-A- 2 140 523

## Beschreibung

Die Erfindung bezieht sich auf einen Schlüssel eines Befestigungsteils, das für eine diebstahlgesicherte Befestigung eines Fahrzeugrades an einer Radnabe bestimmt ist, wobei der Schlüssel folgende Teile aufweist: Einen Führungsteil, der mit einem Führungsbereich des Befestigungsteils kooperiert und der konzentrisch zu einer Achse des Schlüssels verläuft, einen Antriebsteil, der nach einer verschlüsselten Anordnung verteilte Vorsprünge, insbesondere axial verlaufende Stifte hat, mit denen ein Drehmoment auf einen komplementären Antriebsbereich des Befestigungsteils übertragen werden kann und einen Mehrkantteil, an dem ein Drehmoment in den Schlüssel eingebracht werden kann.

Um den Diebstahl von Fahrzeugrädern, insbesondere von Fahrzeugrädern mit hochwertigen Felgen, zu behindern, werden sogenannte Felgenschlösser eingesetzt. Anstelle der normalen, unverschlüsselten Radschrauben bzw. Radmuttern, wie sie typischerweise vom Fahrzeughersteller eingebaut sind, werden spezielle Radschrauben bzw. Radmuttern mit einem Antriebsbereich eingesetzt, der nicht mit üblichen Schlüsseln zu erfassen ist und möglichst auch mit gängigen Hilfsmitteln, wie zum Beispiel Zangen, Rohrstücken, innenverzahnten Antriebsteilen usw. nicht zu lösen ist. Derart gesicherte Radschrauben bzw. Radmuttern werden zusammengefasst als Befestigungsteile bezeichnet. Dem Befestigungsteil ist der Schlüssel zugeordnet, der in axialer Richtung aufgesteckt wird.

Mit dem Schlüssel wirken Antriebsbereich und Führungsbereich des Befestigungsteils zusammen. Der Schlüssel hat hierfür entsprechende Bereiche, nämlich einen Antriebsteil und einen Führungsteil. Beide sind jeweils komplementär zu den jeweiligen Bereichen des Befestigungsteils ausgeführt. Der Antriebsteil muss in Drehrichtung genügend Anschlagfläche aufweisen, damit die erforderlichen Drehmomente übertragen werden können. Die Vorsprünge im Antriebsteil sind nach einer Verschlüsselung versetzt angeordnet, so dass nur das tatsächlich passende Befestigungsteil, das die gleiche komplementäre Anordnung hat, mit dem Schlüssel zusammenwirken kann.

Die Anschlagsflächen wechseln mit der Drehrichtung. Jeder Stift bildet jeweils eine Anschlagsfläche pro Drehrichtung aus. Zur Funktion ist es wichtig, dass alle Anschlagsflächen der Stifte zusammengenommen das erforderliche Drehmoment, insbesondere das Nenndrehmoment, aufnehmen und an die Berührungsflächen der Stiftbohrungen übertragen können.

Nun ist es bei dem Schlüssel nach dem eingangs genannten Stand der Technik, wie er beispielsweise aus dem französischen Geschmacksmuster 9755728 (Eintragungsnummer 421387) der Anmelderin bekannt ist, das Problem aufgetreten, dass diebstahlgesicherte Befestigungen dadurch gelöst wurden, dass aus dem Schlüssel alle Stifte bis auf einen entfernt werden. Dadurch wird ein Passepartout erhalten, der so präparierte Schlüssel passt auf alle Befestigungsteile. Dadurch wird die Sicherheit gegen Diebstahl beeinträchtigt.

Die Erfindung hat es sich zur Aufgabe gemacht, die Sicherheit des Schlüssels der eingangs genannten Art weiter zu verbessern.

Gelöst wird diese Aufgabe ausgehend von den Merkmalen des Schlüssels der eingangs genannten Art dadurch, dass die Vorsprünge an ihrem freien Ende jeweils eine schräge Fläche aufweisen, die im Winkel zur Umfangsrichtung verläuft und ein axiales Anheben des auf ein Befestigungsteil aufgesetzten Schlüssels bewirkt, wenn ein Drehmoment am Schlüssel angreift, das ein Lösen des Befestigungsteils bewirkt.

Die Erfindung schlägt somit vor, dass in Löserichtung ein ausreichender Anteil der Anschlagfläche, die für die Übertragung des Drehmomentes notwendig ist, schräg verläuft, also die schräge Fläche bildet. Dadurch wird einerseits die Anschlagfläche gegenüber dem Stand der Technik verringert, andererseits führt eine Drehung in Löserichtung zu einem Anheben des Schlüssels gegenüber dem Befestigungsteil. Die Anschlagfläche kann nun so dimensioniert werden, dass ein Schlüssel mit nur einem Stift, vorzugsweise auch ein Schlüssel mit einer Unterzahl von Stiften, nicht mehr genügend Anschlagfläche zum Befestigungsteil findet und aufgrund der schrägen Flächen beim Versuch, ein Befestigungsteil zu lösen, axial vom Befestigungsteil abgehoben wird.

Erst wenn die vorgesehene Anzahl von Stiften im Schlüssel vorhanden ist, also ein originaler, nicht präparierter Schlüssel verwendet wird, reicht die Summe der Anschlagflächen aus, um das notwendige Drehmoment zu übertragen. Dann kommt es nicht zu einem axialen Anheben.

Unter Nenndrehmoment wird dasjenige Drehmoment verstanden, dass nach Vorschrift des Autoherstellers für das Anziehen der Schraubverbindungen vorgesehen ist. Typische Nenndrehmomente liegen beispielsweise bei 170 Nm.

Die schrägen Flächen steigen im gleichen Sinn an wie die Schraubenlinie eines Gewindebereichs eines zugehörigen Befestigungsteils. Der Winkel gegenüber der Umfangsrichtung ist jedoch allgemein ein anderer als bei dem Gewinde.

In einer kinematischen Umkehrung ist es möglich, die schräge Fläche nicht an den Vorsprüngen, also den Stiften, sondern im Bereich der zugehörigen Rücksprünge, also Stiftbohrungen des Befestigungsteils auszubilden. Die Stiftbohrungen können dann nicht mehr nur durch eine Bohrung hergestellt werden, sondern müssen zusätzlich auch noch so bearbeitet werden, dass an ihnen die schräge Fläche ausgebildet ist. Es sind auch Mischformen möglich, beispielsweise ein leicht gerundetes freies Ende der Stifte und schräger Verlauf der Rücksprünge in mindestens einer Drehrichtung.

In einer besonders bevorzugten Ausführung sind die vorzugsweise als Stifte ausgebildeten Vorsprünge an ihren freien Enden abgerundet. Insbesondere hat sich eine Ausbildung mit einer Kuppe bewährt. Dies hat den Vorteil, dass beim Einbringen der Stifte in ein Basisteil eines Schlüssels die Stifte nicht speziell ausgerichtet werden müssen. Weiterhin ist nun auch in Drehrichtung des Verschraubens eine schräge Ebene vorhanden, so dass das Befestigungsteil nicht mit wesentlich höherem Drehmoment eingeschraubt werden kann, als später zum Lösen zur Verfügung steht.

Vorzugsweise weist der Antriebsteil eine Gegenkontaktfläche auf, die in einem Winkel kleiner 90° vorzugsweise kleiner 70° zur Achse verläuft und die mit einer Kontaktfläche eines axial angesetzten Befestigungsteils zur Anlage kommt. Bevorzugt schneidet diese Gegenkontaktfläche die Stifte. Dadurch sind diese nur teilweise exponiert. Es wird eine zusätzliche abhebende Kraft erreicht.

In einer bevorzugten Weiterbildung ist ein Befestigungsteil für den Schlüssel vorgesehen, wobei das Befestigungsteil folgende drei Bereiche aufweist:
- einen Gewindebereich, der a) konzentrisch zu einer Achse des Befestigungsteils ist, der b) als Aussen- oder Innengewinde ausgeführt ist und der c) einem entsprechenden Gegengewinde der Nabe angepasst ist,
- einen Antriebsbereich, der nach einer verschlüsselten Anordnung verteilte Rücksprünge, insbesondere Schlüsselbohrungen, hat, an denen ein antreibendes Drehmoment angreift und
- einen Führungsbereich, der sich in Richtung der Achse erstreckt und in einem Führungskopf endet.

Der Führungsbereich weist zumindest auf einem Teilstück seiner axialen Länge eine so klein bemessene Querschnittsfläche auf, dass ein am Führungskopf angreifendes Drehmoment, das mindestens den Wert des normalen Nenndrehmomentes beim Verschrauben des Befestigungsteils in der Nabe hat, ein Zerstören des Führungsbereichs bewirkt.

Bei diesem Befestigungsteil können die Nenndrehmomente, wie sie für Verschrauben und Lösen der Schraubverbindung notwendig sind, nicht allein über den Führungskopf eingeleitet werden. Geschieht dies, kommt es zu einem Zerstören bzw. Abscheren des Führungskopfes. Der Durchmesser des Führungsbereiches kann über seine gesamte axiale Länge die klein bemessene Querschnittslänge aufweisen oder nur über einen Teil dieser Gesamtlänge. In jedem Fall wird Gewicht gespart. Der Führungsbereich ist mechanisch nur so fest, dass beim Zusammenwirken des Schlüssels mit einem Befestigungsteil eine ausreichende Führung gegen Verkippen und damit eine Zentrierung der Drehbewegung erreicht wird. Dieses Ziel kann auch durch andere Ausbildungen erreicht werden. Entscheidend ist, dass der Führungsbereich geschwächt oder zerstört wird, wenn eine ausreichend große Querkraft, wie sie bei normaler Verwendung nicht auftritt, anfällt.

Weitere kinematische Umkehrungen sind möglich. Anstelle der Vorsprünge des Antriebsteils können Rücksprünge vorgesehen sein. In diesem Fall hat dann das Befestigungsteil die entsprechenden, komplementären Vorsprünge, insbesondere Stifte. Unabhängig hiervon kann der Führungsteil als zentrisches Sackloch ausgebildet sein und hat das Befestigungsteil einen positiv vorstehenden Führungsbereich oder ist der Führungsbereich ein Vorsprung, insbesondere ein Führungsstift und ist der Führungsbereich als zentrisches Sackloch ausgebildet, das diesen Führungsstift aufnehmen kann.

Vorzugsweise weist der Antriebsbereich in Nähe der Rücksprünge eine Kontaktfläche auf, an die ein axial angesetzter Schlüssel zur Anlage kommt und die in einem Winkel kleiner 90°, vorzugsweise kleiner 70° zur Achse verläuft. Vorzugsweise hat der Antriebsteil eine Gegenkontaktfläche, die mit der Kontaktfläche des axial angesetzten Befestigungsteils zur Anlage kommt und die ebenfalls in einem Winkel kleiner 90°, vorzugsweise kleiner 70° zur Achse verläuft.

Die genannte Kontaktfläche und Gegenkontaktfläche sind jeweils so ausgebildet, dass bei fehlendem Führungsbereich ein Verkippen des Schlüssels gegenüber dem Befestigungsteil möglich ist. Es ist also der Führungsbereich, der die axiale Zuordnung zwischen Schlüssel und Befestigungsteil sichert. Ist er nicht vorhanden, soll ein gleichachsiges, gemeinsames Drehen von Schlüssel und Befestigungsteil nicht möglich sein, jedenfalls nicht beim Nenndrehmoment. Dies wird insbesondere durch eine schräge oder sogar bogenförmige, nach aussen konvex verlaufende Gegenkontaktfläche erreicht.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im folgenden näher erläutert werden. In dieser Zeichnung zeigen:
- Figur 1:: Eine Seitenansicht, teilweise geschnitten, eines Schlüssels für ein Befestigungsteil einer diebstahlgesicherten Befestigung eines Fahrzeugrades an einer Nabe,
- Figur 2:: eine Seitenansicht, teilweise geschnitten, eines Befestigungsteils, das zum Schlüssel nach Figur 1 passt und in achsgleicher Ausrichtung zu diesem dargestellt ist,
- Figur 3:: eine Darstellung wie Figur 1 eines Schlüssels, jedoch nunmehr in einer geänderten Ausführung und
- Figur 4:: eine Darstellung wie Figur 2 eines Befestigungsteils, jedoch in einer geänderten, zum Schlüssel nach Figur 3 passenden Ausbildung.

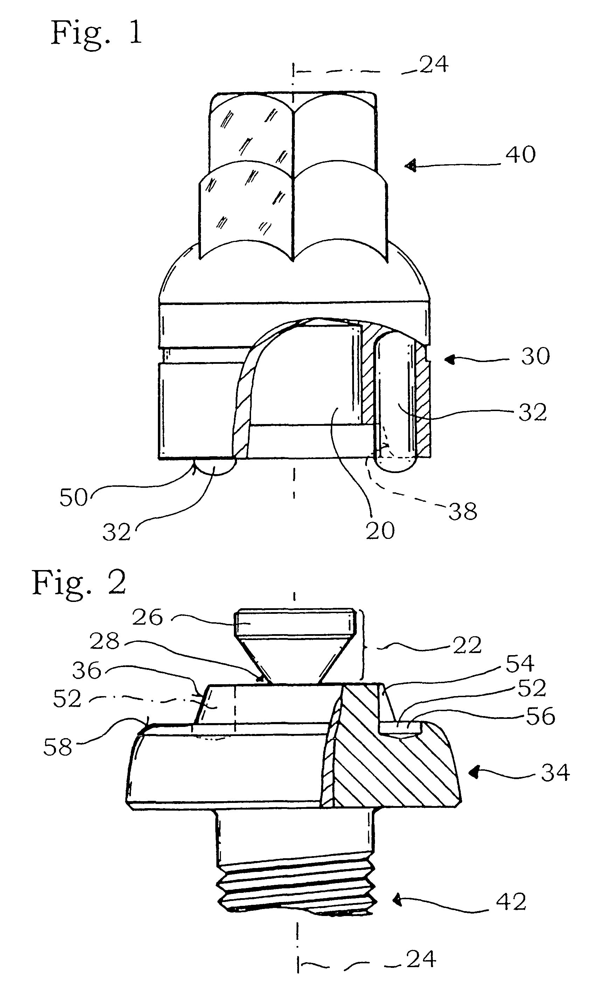

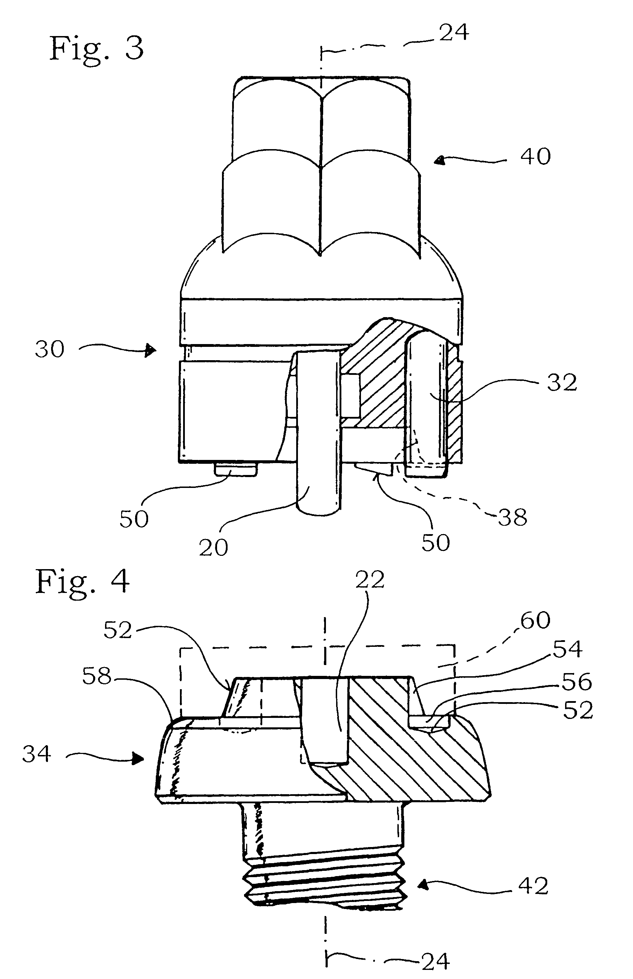

Zunächst wird das Ausführungsbeispiel nach den Figuren 1 und 2 besprochen. Der Schlüssel nach Figur 1 hat einen Führungsteil 20, der mit einem Führungsbereich 22 des Befestigungsteils nach Figur 2 kooperiert und der konzentrisch zu einer Achse 24 verläuft. Er hat weiterhin einen Antriebsteil 30, der nach einer verschlüsselten Anordnung verteilte Stifte 32 hat, die die Vorsprünge bilden. Sie verlaufen axial, es sind insgesamt vier Vorsprünge vorgesehen, von denen in Figur 1 zwei und in Figur 3 drei zu sehen sind.
Der Antriebsteil 30 des Schlüssels ist komplementär zu einem Antriebsbereich 34 des Befestigungsteils nach Figur 2, das hier als Radschraube ausgeführt ist. Schliesslich hat der Schlüssel ein Mehrkantteil 40, das zwei gestuft angeordnete und in Richtung der Achse 24 orientierte Sechskante aufweist, hierzu wird auf DE 296 17 043 U verwiesen.

Im Ausführungsbeispiel wird das Führungsteil 20 durch eine Sackbohrung im glockenförmigen Gehäuse des Schlüssels realisiert, diese Bohrung ist konzentrisch zur Achse 24 und nach unten hin offen. Als unten wird entsprechend der Darstellung in den Figuren der Teil des Schlüssels verstanden, an dem die Stiftbohrungen 32 vorstehen. Der Führungsteil 20 ist in seiner axialen Tiefe und seiner Innenabmessung dem Führungsbereich 22 angepasst. Der Führungsbereich 22 ist konzentrisch zur Achse 24 und erstreckt sich in Gegenrichtung zu einem Gewindebereich 42, der auch konzentrisch zur Achse 24 ist. Er ist in der gezeigten Ausführung als Aussengewinde ausgeführt. Er ist einem entsprechenden Gegengewinde der (nicht dargestellten) Nabe angepasst.

Der Führungsbereich endet in einem Führungskopf 26, der hier die Form eines flachen Zylinders hat. Er ist der Sackbohrung, die den Führungsteil 20 bildet, angepasst. Werden Schlüssel und Befestigungsteil in der Anordnung nach Figur 1 und 2 axial zusammengeschoben, findet der Erstkontakt zwischen dem Führungskopf 26 und dem Führungsteil 20 statt. Dadurch ist eine axiale Zuordnung von Schlüssel und Befestigungsteil gegeben, beide Teile können noch gegeneinander um die Achse 24 verdreht werden. Es ist auch eine geringe Verkippung innerhalb der Herstellungstoleranz möglich.

Unterhalb des Führungskopfes 26 verjüngt sich der Führungsbereich 22 deutlich, er besteht in diesem Teilstück aus einem Kegelstumpf. Der Durchmesser verringert sich zu einer klein bemessenen Querschnittsfläche 28 hin, auch Sollbruchstelle genannt, und beträgt dort etwas weniger als 40% des Durchmessers des Führungskopfes 26. Diese Querschnittsfläche 28 befindet sich unmittelbar angrenzend an den Antriebsbereich 34.

Die Sollbruchstelle 28 ist so bemessen, dass ein allein am Führungskopf 26 angreifendes Nenndrehmoment (bei eingespanntem Antriebsbereich 34 bzw. eingespanntem Gewindebereich 42) zu einem Abscheren des Führungsbereiches 22 führt. Als Nenndrehmoment wird das Drehmoment verstanden, das der Automobilhersteller für das konkrete Befestigungsteil vorschreibt. Typische Nenndrehmomente liegen bei 170 Nm.

Die Querschnittsfläche 28 kann beliebig ausgeführt sein. Weiterhin ist die dargestellte Kegelform nur ein Beispiel. Es ist auch möglich, dass der gesamte Führungsbereich 22 die Querschnittsfläche 28 aufweist, also z.B. zylindrisch ist. Bevorzugt ist aber eine konkrete Stelle, an der ein Sollbruch stattfinden kann. Diese Stelle sollte möglichst nahe am Antriebsbereich 34 liegen, damit beim Abscheren möglichst wenig vom Führungsbereich 22 verbleibt und sich somit möglichst wenig Angriffsmöglichkeiten für ein Lösewerkzeug bieten.

Das Befestigungsteil nach Figur 2 kann man als eine normale Schraube ansehen, der Gewindebereich 42 bildet den Schraubenschaft, der Antriebsbereich 34 bildet den Kopf und der Führungsbereich 22 ist axial auf den Kopf aufgesetzt. Der Antriebsbereich 34 kommt erst mit dem Antriebsteil 30 in Kontakt, wenn Führungsteil 20 und Führungsbereich 22 bereits im Eingriff sind. Der Antriebsbereich 34 hat eine Kontaktfläche 36, die schräg zur Achse 24 verläuft. Sie liegt auf einem Kegel, dessen Spitze sich oberhalb des Befestigungsteils, also oberhalb des Führungsbereichs 22, befindet und der einen Öffnungswinkel von etwa 30° hat. Dieser Öffnungswinkel kann bevorzugt im Bereich 20° bis 70° liegen. Der Winkel zur Achse 24 ist dann die Hälfte dieses Öffnungswinkels.

Der Schlüssel hat eine entsprechende Gegenkontaktfläche 38 gleichen Winkels, sie ist in Figur 1 gestrichelt angedeutet.

Die Stifte 32 sind separate Teile, die in das ansonsten einstückig hergestellte Basisteil des Schlüssels eingebracht sind. In das Basisteil werden parallel zur Achse 24 vier Bohrungen für die Stifte eingebracht, in diesen werden dann die Stifte 32 gehalten. Die Stifte 32 springen geringfügig gegenüber der Unterfläche des Basisteils vor. An ihrem freien Ende sind die Stifte kuppenförmig ausgebildet. Dadurch stellen sie verringert quer zur Drehrichtung stehende Anschläge dar, vielmehr bilden sie in beiden Drehrichtungen eine schräge Fläche.
Entscheidend ist die schräge Fläche 50 in Drehrichtung des Lösens der Verschraubung. Sie ist insbesondere aus Figur 3 gut ersichtlich. Sie steigt wie die Schraubenlinie des Gewindebereichs 42 an, bewirkt also ein axiales Anheben im Sinne eines Entfernens vom Befestigungsteil, wenn sie mit einem entsprechenden Gegenanschlag am Befestigungsteil zusammenwirkt. Dieser Gegenanschlag wird gebildet durch den Rand von Schlüsselbohrungen 52, die komplementär angeordnet zu den Stiften im Antriebsbereich 34 vorgesehen sind und die Rücksprünge bilden. Diese Schlüsselbohrungen sind im Randbereich ausgebildet, dadurch nehmen sie die Stifte 32 nur teilweise auf. Sie durchschneiden die Kontaktfläche 36, dadurch kommt es zu einer etwa dreieckförmigen seitlichen Anlagefläche 54, die in beiden Drehrichtungen vorhanden ist. Die Schlüsselbohrungen gehen zudem ein Stück in das Material des Führungsbereiches 22 hinein und bilden dort ringförmige Abstützflächen 56. An diesen schlagen die freien Enden der Stifte 32 an, wenn ein Drehmoment vom Schlüssel auf das Befestigungsteil übertragen werden soll. Aufgrund der schrägen Fläche 50 jedes Stiftes 32 kommt es zu dem beschriebenen axialen Anheben. Dieses wird durch die schräg verlaufende Kontaktfläche 36 und die zugehörige Gegenkontaktfläche 38 begünstigt.

Die Anordnung ist so gewählt, dass ein Nenndrehmoment nicht mit einer Anzahl von Stiften im Schlüssel aufgebracht werden kann, die kleiner ist als die vorgesehene Anzahl von Stiften 32. Dadurch wird vermieden, dass man im Schlüssel alle Stifte 32 bis auf einen entfernt und damit ein Passepartout für alle Befestigungsteile hat. Die Anlageflächen 54 zusammen mit den Abstützflächen 56 bilden Berührungsflächen und sind so bemessen, dass alle Stifte 32 für die Übertragung des Nenndrehmomentes herangezogen werden müssen. Sind nicht alle Stifte 32 vorhanden, vermögen die Flächen 54, 56 nicht genügend Drehmoment aufzunehmen, vielmehr kommt es insbesondere aufgrund der schrägen Flächen 50 und auch der Zylinderform der Stifte 32 zum Abheben.

Grundsätzlich müssen die schrägen Flächen 50 nur in Drehrichtung beim Lösen ausgebildet sein, wie dies im Ausführungsbeispiel nach Figur 3 der Fall ist. Im Ausführungsbeispiel nach Figur 1 und 2 sind sie auch in der Antriebsrichtung, also Verschrauberichtung, vorgesehen. Die kuppenförmige Ausbildung gemäß Fig. 1 erleichtert jedoch die Montage, eine Fehlpositionierung ist wegen der Drehsymmetrie nicht möglich.

Der Antriebsbereich 34 hat eine Aussenkontur 58, die bogenförmig, nach aussen konvex verläuft Dadurch wird das Ansetzen eines speziellen Werkzeuges in diesem Bereich erschwert.

Der Rundungsradius am freien Ende der Stifte 32 liegt zwischen 0,1 und 2 mm. Die Stifte haben typischerweise einen Durchmesser von 4 mm. Sie sind vorzugsweise gehärtet, insbesondere im Bereich ihres freien Endes. Die Stifte stehen etwa 1,5 mm gegenüber der Abschlussfläche des Basisteils frei vor.

Im zweiten Ausführungsbeispiel nach den Figuren 3 und 4 sind folgende Unterschiede zum ersten Ausführungsbeispiel vorhanden, es werden nur die Unterschiede beschrieben, gleichbleibende Funktionen werden nicht erneut erwähnt:

Das Führungsteil 20 des Schlüssels ist nun nicht mehr eine Zylinderbohrung, sondern ein zentrischer Stift, der vom unteren Ende des Basisteils weiter frei vorragt als die Stifte 32. Dementsprechend ist der Führungsbereich 22 als Sackbohrung im Befestigungsteil ausgebildet. Insoweit liegt eine kinematische Umkehrung vor. Das als Stift ausgeführte Führungsteil 20 ist im Basisteil des Schlüssels nicht vollflächig gelagert, vielmehr hat die Aufnahmebohrung eine Aussparung. Dadurch ist es möglich, das stiftförmige Führungsteil 20 durch eine ausreichend grosse Kraft, die quer zur Achse 24 angreift, aus seiner Position zu drücken. In einer Alternative kann auch eine Sollbruchstelle im stiftförmigen Führungsteil 20 vorgesehen sein. Entscheidend ist, dass die Führungseigenschaften verlorengehen, wenn eine ausreichende Querkraft wirkt. Diese ausreichende Querkraft wird bei Einsatz eines normalen Schlüssels nicht erreicht, wohl aber bei Verwendung eines Schlüssels, der nicht alle Stifte 32 aufweist.

Schliesslich sind die freien Enden der Stifte 32 nur in Löserichtung mit der schrägen Fläche 50 versehen, also nicht kuppenförmig ausgeführt. Hierauf wurde bereits hingewiesen.

In Figur 4 ist noch eine Kappe 60 gestrichelt angedeutet, die den Antriebsbereich 34 übergreift und vorzugsweise so gestaltet ist, dass das gesamte Befestigungsteil wie eine handelsübliche Radmutter aussieht. Diese Kappe ist am Führungsteil 20 verankert, hierzu bietet sich insbesondere die Querschnittsfläche 28 an.

## Patentansprüche

1. Schlüssel eines Befestigungsteils, das für eine diebstahlgesicherte Befestigung eines Fahrzeugrades an einer Radnabe bestimmt ist, wobei der Schlüssel folgende Teile aufweist :
- einen Führungsteil (20), der mit einem Führungsbereich (22) des Befestigungsteils kooperiert und der konzentrisch zu einer Achse (24) des Schlüssels verläuft,
- einen Antriebsteil (30), der nach einer verschlüsselten Anordnung verteilte Vorsprünge, insbesondere axial verlaufende Stifte (32) hat, mit denen ein Drehmoment auf einen komplementären Antriebsbereich (34) eines Befestigungsteils übertragen werden kann und
- einen Mehrkantteil (40), an dem ein Drehmoment in den Schlüssel eingebracht werden kann,
**dadurch gekennzeichnet, dass** die Vorsprünge (32) an ihrem freien Ende jeweils eine schräge Fläche (50) aufweisen, die im Winkel zur Umfangsrichtung verläuft und ein axiales Anheben des auf ein Befestigungsteil aufgesetzten Schlüssels bewirkt, wenn ein Drehmoment am Mehrkantteil (40) angreift, das ein Lösen des Befestigungsteils bewirkt.

2. Schlüssel an Anspruch 1, **dadurch gekennzeichnet, dass** die Vorsprünge (32) an ihren freien Enden abgerundet sind, insbesondere eine Kuppe (60) ausbilden.

3. Schlüssel an Anspruch 1, **dadurch gekennzeichnet, dass** die schrägen Flächen (50) so bemessen sind, dass ein axiales Abheben des Schlüssels bewirkt wird, wenn ein Schlüssel verwendet wird, der nicht mit allen vorgesehenen Vorsprüngen (32) versehen ist.

4. Schlüssel an Anspruch 1, **dadurch gekennzeichnet, dass** der Antriebsteil (30) eine Gegenkontaktfläche (38) aufweist, die mit einer Kontaktfläche (36) eines axial angesetzten Befestigungsteils zur Anlage kommt und die in einem Winkel kleiner 90°, vorzugsweise kleiner 70° zur Achse verläuft.

5. Schlüssel nach Anspruch 1 und zugehöriges Befestigungsteil für eine diebstahlgesicherte Befestigung eines Fahrzeugrades an einer Radnabe, wobei das Befestigungsteil folgende drei Bereiche aufweist:
- einen Gewindebereich (42), der a) konzentrisch zu einer Achse des Befestigungsteils ist, der b) als Aussen- oder Innengewinde ausgeführt ist und der c) einem entsprechenden Gegengewinde der Nabe angepasst ist,
- einen Antriebsbereich (34), der nach einer verschlüsselten Anordnung verteilte Rücksprünge (32), insbesondere Schlüsselbohrungen, hat, an denen ein antreibendes Drehmoment angreift und
- einen Führungsbereich (22), der sich in Richtung der Achse erstreckt und in einem Führungskopf (26) endet,
**dadurch gekennzeichnet, dass** der Führungsbereich (22) zumindest auf einem Teilstück seiner axialen Länge eine so klein bemessene Querschnittsfläche (28) aufweist, dass ein am Führungskopf (26) angreifendes Drehmoment, das mindestens den Wert des normalen Nenndrehmomentes beim Verschrauben des Befestigungsteils in der Nabe hat, ein Zerstören des Führungsbereichs bewirkt.

6. Schlüssel und Befestigungsteil nach Anspruch 5, **dadurch gekennzeichnet, dass** der Führungsbereich (22) einen Einschnitt aufweist, der sich zwischen dem Führungskopf (26) und dem Antriebsbereich (34) befindet, und dass sich die klein bemessene Querschnittsfläche (28) im Tiefsten des Einschnitts befindet.

7. Schlüssel und Befestigungsteil nach Anspruch 6, **dadurch gekennzeichnet, dass** im Einschnitt die Querschnittsfläche (28) des Führungsbereiches (22) mindestens 30% kleiner ist als die Querschnittsfläche (28) des Führungskopfes (26).

8. Schlüssel und Befestigungsteil nach Anspruch 5, **dadurch gekennzeichnet, dass** die Querschnittsfläche (28) des Führungsbereiches (22) so ausreichend groß bemessen ist, dass ein am Antriebsbereich (34) angesetzter, zum Befestigungsteil passender Schlüssel ausreichend geführt ist und sich nicht beim Aufbringen eines Nenndrehmomentes schräg zur Achse des Befestigungsteiles stellen kann.

9. Schlüssel und Befestigungsteil nach Anspruch 5, **dadurch gekennzeichnet, dass** der Antriebsbereich (34) in Nähe der Rücksprünge (32) eine Kontaktfläche (36) aufweist, an die ein axial angesetzter Schlüssel zur Anlage kommt und die in einem Winkel kleiner 90°, vorzugsweise kleiner 70° zur Achse verläuft.

10. Schlüssel und Befestigungsteil nach Anspruch 9, **dadurch gekennzeichnet, dass** eine Außenkontur (58) vorgesehen ist, die bogenförmig, nach aussen konvex verläuft.

## Claims

1. A wrench of a fastening means for theft-secured fastening of a vehicle wheel on a wheel hub, said wrench comprising the following parts:
- a guide part (20) that cooperates with a guide region (22) of the fastening part and is concentric with an axis (24) of the wrench,
- a drive part (30) having projections arranged according to an encoded pattern, more specifically axially oriented pins (32), by means of which a torque may be transmitted to a complementary drive region (34) of a fastening part and
- a polygonal part (40) at which a torque may be applied to the wrench,
**characterized in that** each projection (32) comprises at its free end an inclined surface (50) that extends at an angle to the circumferential direction and causes the wrench placed onto the fastening part to be lifted when a torque is applied to the polygonal part (40) for unscrewing the fastening part.

2. The wrench as set forth in claim 1, **characterized in that** the projections (32) are rounded at their free ends and more specifically form a rounded top (60).

3. The wrench as set forth in claim 1, **characterized in that** the inclined surfaces (50) are dimensioned such that the wrench is caused to lift when a wrench is used that is not equipped with all of the projections (32) provided for.

4. The wrench as set forth in claim 1, **characterized in that** the drive part (30) comprises a mating contact surface (38) that comes into contact with a contact surface (36) of an axially positioned fastening part and that is inclined at an angle of less than 90°, preferably of less than 70°, relative to the axis.

5. The wrench as set forth in claim 1 and an associated fastening part for theft-secured fastening of a vehicle wheel on a wheel hub, the fastening part comprising the following three regions:
- a threaded region (42) that a) is concentric with an axis of the fastening means, that b) is implemented as an external or an internal thread and that c) is mated with a corresponding complementary mating thread of the hub,
- a drive region (34) that has setbacks (32) arranged according to an encoded pattern, more specifically wrench bores to which a driving torque is applied and
- a guide region (22) extending in the direction of the axis, said guide region ending at a guide head (26),
**characterized in that** the guide region (22) comprises, at least on a portion of its axial length, so small a cross sectional area (28) that a torque applied to the guide head (26) and having at least the value of the normal nominal torque generated while screwing the fastening part in the hub will destroy the guide region.

6. The wrench and fastening part as set forth in claim 5, **characterized in that** the guide region (22) comprises an indentation that is located between the guide head (26) and the drive region (34) and that the small-dimensioned cross sectional area (28) is located at the lowest point of the indentation.

7. The wrench and fastening part as set forth in claim 6, **characterized in that** in the indentation the cross sectional area (28) of the guide region (22) is at least 30 % smaller than the cross sectional area (28) of the guide head (26).

8. The wrench and fastening part as set forth in claim 5, **characterized in that** the cross sectional area (28) of the guide region (22) is dimensioned large enough to allow a wrench mating the fastening part and placed onto the drive region (34) to be sufficiently guided and to prevent it from slanting with respect to the axis of the fastening part when a normal torque is applied.

9. The wrench and fastening part as set forth in claim 5, **characterized in that** the drive region (34) comprises, in proximity to the setbacks (52), a contact surface (36) which is inclined at an angle of less than 90°, preferably of less than 70°, relative to the axis and against which an axially positioned wrench is brought into contact.

10. The wrench and fastening part as set forth in claim 9, **characterized in that** there is provided an outer contour (58) that is convexly curved outward.

## Revendications

1. Clé d'une pièce de fixation qui est destinée à une fixation anti-vol d'une roue de véhicule sur un moyeu de roue, la clé présentant les parties suivantes:
- une partie de guidage (20) qui coopère avec une zone de guidage (22) de la pièce de fixation et qui s'étend de façon concentrique à un axe (24) de la clé,
- une partie d'entraînement (30) qui présente des projections réparties selon une disposition codée, en particulier des broches (32) qui s'étendent de manière axiale et avec lesquelles un couple peut être transmis à une zone complémentaire d'entraînement (34) d'une pièce de fixation, et
- une partie polygonale (40) sur laquelle un couple peut être appliqué dans la clé,
**caractérisée par le fait que** les projections (32) présentent respectivement une surface oblique (50) à leur extrémité libre, qui s'étend à un angle par rapport à la direction périphérique et qui provoque un soulèvement axial de la clé mise sur une pièce de fixation, lorsqu'un couple est appliqué sur la partie polygonale (40), qui provoque un desserrage de la pièce de fixation.

2. Clé selon la revendication 1, **caractérisée par le fait que** les projections (32) sont arrondies à leurs extrémités libres, en particulier forment un sommet arrondi (60).

3. Clé selon la revendication 1, **caractérisée par le fait que** les surfaces obliques (50) sont dimensionnées de telle manière qu'un soulèvement axial de la clé est provoqué lorsqu'on utilise une clé qui n'est pas pourvue de toutes les projections (32) prévues.

4. Clé selon la revendication 1, **caractérisée par le fait que** la partie d'entraînement (30) présente une contre-surface de contact (38) qui vient en appui avec une surface de contact (36) d'une pièce de fixation mise de manière axiale et qui s'étend à un angle inférieur à 90°, de préférence inférieur à 70°, par rapport à l'axe.

5. Clé selon la revendication 1 et pièce de fixation correspondante pour une fixation anti-vol d'une roue de voiture à un moyeu, la pièce de fixation présentant les trois zones suivantes :
- une zone filetée (42) qui a) est concentrique à un axe (24) de la pièce de fixation, b) est réalisée comme filet extérieur ou filet intérieur et c) est adaptée à un contre-filet correspondant du moyeu,
- une zone d'entraînement (34) qui présente des retraits (32) répartis selon une disposition codée, en particulier des trous codés sur lesquels est appliqué un couple moteur, et
- une zone de guidage (22) qui s'étend dans la direction de l'axe et qui se termine dans une tête de guidage (26),
**caractérisée par le fait que** la zone de guidage (22) présente au moins sur un tronçon de sa longueur axiale, une section (28) dimensionnée d'une manière tellement petite qu'un couple appliqué sur la tête de guidage (26), qui présente au moins la valeur du couple nominal normal lors du vissage de la pièce de fixation dans le moyeu, provoque une destruction de la zone de guidage.

6. Clé et pièce de fixation selon la revendication 5, **caractérisée par le fait que** la zone de guidage (22) présente une incision qui se trouve entre la tête de guidage (26) et la zone d'entraînement (34) et que la section (28) à petite dimension se trouve sur le point le plus bas de l'incision.

7. Clé et pièce de fixation selon la revendication 6, **caractérisée par le fait que**, dans l'incision, la section (28) de la zone de guidage (22) est au moins 30 % plus petite que la section (28) de la tête de guidage (26).

8. Clé et pièce de fixation selon la revendication 5, **caractérisée par le fait que** la section (28) de la zone de guidage (22) est dimensionnée d'une manière tellement suffisante qu'une clé mise à la zone d'entraînement (34) et ajustée à la pièce de fixation est guidée suffisamment et ne peut pas se placer obliquement à l'axe de la pièce de fixation lorsqu'un couple nominal est appliqué.

9. Clé et pièce de fixation selon la revendication 5, **caractérisée par le fait que** la zone d'entraînement (34) présente, à proximité des retraits (32), une surface de contact (36) sur laquelle une clé mise de manière axiale vient en appui et qui s'étend à un angle inférieur à 90°, de préférence inférieur à 70°, par rapport à l'axe (24).

10. Clé et pièce de fixation selon la revendication 9, **caractérisée par le fait que** l'on prévoit un contour extérieur (58) qui s'étend en arc, de manière convexe vers l'extérieur.
